(19) Europäisches Patentamt
European Patent Office
Office européen des brevets

(11) Veröffentlichungsnummer : **0 449 775 A2**

(12) **EUROPÄISCHE PATENTANMELDUNG**

(21) Anmeldenummer : **91810190.8**

(22) Anmeldetag : **21.03.91**

(51) Int. Cl.$^5$ : **C08G 63/672,** C08G 63/42, C08L 63/00, // (C08L63/00, 67:02)

(30) Priorität : **29.03.90 CH 1036/90**

(43) Veröffentlichungstag der Anmeldung : **02.10.91 Patentblatt 91/40**

(84) Benannte Vertragsstaaten : **CH DE ES FR GB IT LI**

(71) Anmelder : **CIBA-GEIGY AG**
**Klybeckstrasse 141**
**CH-4002 Basel (CH)**

(72) Erfinder : **Steinmann, Bettina, Dr.**
**Les Russilles**
**CH-1724 Praroman (CH)**

(54) **Polyether-Polyester-Blockcopolymere und deren Verwendung als Dispergiermittel.**

(57) Polyether-Polyester-Blockcopolymere erhältlich durch anionische Copolymerisation einer Monoepoxidverbindung mit einem cyclischen Anhydrid einer aromatischen Dicarbonsäure unter Verwendung eines Alkalimetallsalzes eines Polyalkylenglykols oder eines Polyalkylenglykolmonoalkylethers als Initiator, eignen sich als Dispergiermittel, insbesondere für die Herstellung von wässrigen Epoxidharz-dispersionen bzw. -emulsionen. Mit diesen Dispersionen unter Zusatz von Härtungsmitteln hergestellte Ueberzüge zeichnen sich durch verbesserte lacktechnische Eigenschaften aus.

EP 0 449 775 A2

Die Erfindung betrifft bestimmte Polyether-Polyester-Blockcopolymere, ein Verfahren zu deren Herstellung, deren Verwendung als Dispergiermittel, wässrige Dispersionen enthaltend die besagten Blockcopolymere und Epoxidharze sowie die durch Härtung der Dispersionen erhältlichen vernetzten Produkte.

Polyether-Polyester-Blockcopolymere sind bekannt. So beschreibt z.B. die US 4,861,512 solche Blockcopolymere hergestellt durch Polykondensation eines Alkylenglykols mit einer Dicarbonsäure oder deren Diester in Gegenwart eines auf einer Seite endverkappten Polyethylenglykols und gegebenenfalls eines Alkalimetallsalzes einer sulfonierten aromatischen Dicarbonsäure oder eines Diesters davon. Die so erhaltenen Blockcopolymere werden als Waschmittelzusätze verwendet.

Es wird auch seit langem versucht, stabile wässrige Epoxidharzdispersionen bzw. -emulsionen herzustellen, welche sich für die Herstellung von Ueberzügen mit guten lacktechnischen Eigenschaften eignen. Bekanntlich soll, wo immer möglich, die Verwendung leicht entflammbarer und toxikologisch nicht unbedenklicher organischer Lösungsmittel vermieden werden.

So beschreibt z.B. die US 4,415,682 die Herstellung wässriger Epoxidharzdispersionen mit Kondensarionsprodukten aus Polyalkylenglykolen und Diepoxiden als Emulgatoren. Um diese Dispersionen erhalten zu können, müssen allerdings grössere Mengen organischer Lösungsmittel eingesetzt werden, welche dann, z.B. durch Destillation unter vermindertem Druck weitgehend entfernt werden. Diese Methode ist umständlich und zeitaufwendig. Zudem sind die lacktechnischen Eigenschaften der damit hergesellten Ueberzüge nicht hervorragend.

Gemäss der US 4,886,845 werden die Eigenschaften der erhaltenen Ueberzüge durch Verwendung selbstemulgierbarer Epoxidharze verbessert. Solche Epoxidharze werden durch Vorverlängerung von kommerziell erhältlichen Epoxidharzen mit einem aromatischen Polyol und einem der oben beschriebenen Emulgatoren gemäss der US 4,415,682 erhalten

Dieser zusätzliche Schritt des chemischen Einbaus des Emulgators in das Epoxidharz, wobei von Flüssigharzen ausgegangen wird, die mit dem aromatischen Polyol und dem Emulgator in ein modifiziertes Festharz umgewandelt werden, ist nachteilig, da somit die Verwendung von auf dem Markt erhältlichen, unmodifizierten Epoxidharzen in den Dispersionen nicht möglich ist.

Mit ähnlichen Nachteilen sind die selbstemulgierbaren Epoxidharze gemäss der US 4,315,044 behaftet. Diese werden durch Umsetzung eines Diglycidylethers eines zweiwertigen Phenols und eines Diglycidylethers eines Polyoxyalkylenglykols mit einem zweiwertigen Phenol hergestellt.

Gegenstand vorliegender Erfindung sind Polyether-Polyester-Blockcopolymere erhältlich durch anionische Copolymerisation einer Monoepoxidverbindung mit einem cyclischen Anhydrid einer aromarischen Dicarbonsäure unter Verwendung eines Alkalimetallsalzes eines Polyalkylenglykols oder eines Polyalkylenglykolmonoalkylethers als Initiator.

Die erfindungsgemässen Blockcopolymere eignen sich als Dispergermittel, insbesondere für die Herstellung wässriger Epoxidharzdispersionen bzw. -emulsionen. Der Begriff Dispergermittel wird anmeldungsgemäss sowohl für Dispergermittel als auch für Emulgatoren verwendet, d.h. allgemein für ein Mittel, das für die Herstellung von Dispersionen oder Emulsionen geeignet ist. Ebenso wird anmeldungsgemäss unter dem Begriff Dispersion sowohl eine Dispersion als auch eine Emulsion verstanden.

Mit den erfindungsgemässen Blockcopolymeren können wässrige Epoxidharzdispersionen aus Mischungen von einem Fest- bzw. Flüssigharz, dem Blockpolymeren und, falls zweckmässig, kleinen Mengen eines organischen Lösungsmittels durch langsame Wasserzugabe, beispielsweise mit einem Dissolver, hergestellt werden. Wegen der allfälligen geringen Menge an organischem Lösungsmittel entfällt eine nachträgliche Destillation. Auch ist ein chemischer Einbau des Dispergiermittels und damit ein zusätzlicher Schritt bei der Herstellung nicht erforderlich. Zudem haben die mit den neuen Dispergiermitteln hergestellten wässrigen Epoxidharzdispersionen sehr gute lacktechnische Eigenschaften.

Die als Initiator für die anionische Polymerisation bei der Herstellung der Blockcopolymere verwendeten Alkalimetallsalze von Polyalkylenglykolen oder von Polyalkylenglykolmonoalkylethem, sind vorzugsweise Kalium- und insbesondere Natriumsalze. Sie können z.B. durch Umsetzung eines geeigneten Polyalkylenglykols oder eines Polyalkylenglykolmonoalkylethers mit einer Na-Suspension in Toluol oder mit Na- oder K-Naphthalin in Dioxan oder Tetrahydrofuran hergestellt werden. Die Umsetzung kann z.B. unterhalb oder bei Raumtemperatur während 1 bis 3 Stunden vorzugsweise unter Schutzgas erfolgen.

Geeignete Polyalkylenglykole sind z.B. Verbindungen mit 2-10 C-Atomen im Alkylenrest, welcher geradkettig oder verzweigt sein kann. Beispiele solcher Reste sind Decamethylen, Octamethylen, Heptamethylen, Hexamethylen, Pentamethylen, 2,2-Dimethyl-1,3-propylen, Butylen, 1,2- und 1,3-Propylen oder Ethylen. Als Polyalkylenglykole können sowohl Homo- als auch Copolyether verwendet werden. Besonders geeignete Copolyether sind Polyethylenglykol-Polypropylenglykol-Blockcopolymere. Geeignete Monoalkylether von Polyalkylenglykolen sind z.B. $C_1$-$C_4$-Alkylether, wie Butyl-, Propyl-, Ethyl- oder insbesondere Methylether. Polyalkylenglykole sowie deren Monoalkylether sind bekannt und auch im Handel erhältlich.

Anmeldungsgemäss werden vorzugsweise Polyalkylenglykole mit 2-5000, insbesondere mit 10-250, ganz besonders bevorzugt mit 45-250 Alkylenglykoleinheiten eingesetzt. Bevorzugt sind Verbindungen, worin die Alkylengruppe des Polyalkylenglykols 1,4-Butylen, 1,2- oder 1,3-Propylen und insbesondere Ethylen bedeutet.

Bei der Herstellung der erfindungsgemässen Blockpolymere kann im Prinzip jede Monoepoxidverbindung, welche anionisch polymerisierbar ist, verwendet werden. Beispiele geeigneter Monoepoxide sind Alkyl-, Cycloalkyl- oder Arylglycidylether, epoxidierte Olefine, wie Styroloxid, Alkenoxide oder Cycloalkenoxide. Bevorzugte Monoepoxide sind Glycidylether, insbesondere Phenyl-, p-Tolyl oder Butylglycidylether, Alkenoxide, insbesondere 1-Hexenoxid, oder Cycloalkenoxide, insbesondere Cyclohexenoxid.

Als cyclisches Anhydrid kann bei der Herstellung der erfindungsgemässen Blockpolymere jedes Anhydrid einer aromatischen Dicarbonsäure verwendet werden, deren Carboxylgruppen in ortho- oder peri-Stellung zueinander stehen. Die Dicarbonsäuren können unsubstituiert sein oder auch einen oder mehrere Substituenten am Ring enthalten, solange diese unter den Reaktionsbedingungen der anionischen Polymerisation nicht reagieren. Beispiele für geeignete Substituenten sind insbesondere Alkyl-, Cycloalkyl- oder Arylreste oder Halogenatome, wie Chlor oder Brom. Beispiele geeigneter Dicarbonsäuren sind Phthalsäure, 1,2-, 2,3- und 1,8-Naphthalindicarbonsäure, 2,6-Dichlornaphthalin-1,8-dicarbonsäure, 2,3,6,7-Tetrachlornaphthalin-1,8-dicarbonsäure, 2,3- oder 3,4-Benzophenondicarbonsäure oder 2,3- oder 3,4-Biphenyltetracarbonsäure.

Bevorzugte cyclische Anhydride sind 1,8-Naphthalindicarbonsäureanhydrid und insbesondere Phthalsäureanhydrid.

Je nach dem, ob als anionischer Initiator ein Alkalimetallsalz eines Polyalkylenglykolmonoalkylethers oder ein Alkalimetallsalz eines Polyalkylenglykols verwendet wird, entstehen Blockcopolymere enthaltend einen Polyetherblock und einen oder zwei Polyesterblöcke. Die Herstellung der erfindungsgemässen Blockcopolymere durch anionische Polymerisation ermöglicht es, je nach Wahl des Polyalkylenglykolinitiators gezielt Di- oder Triblockpolymere zu syntherisieren. Dies ist bei der Synthese durch Polykondensation, wie sie z.B. in der eingangs erwähnten US 4,861,512 beschrieben ist, nicht möglich.

Bevorzugt werden Blockcopolymere, worin der Polyesterblock 2-1000, vorzugsweise 3-100, besonders bevorzugt 3-35 wiederkehrende Einheiten hat.

Ebenso bevorzugt werden Blockcopolymere mit einem mittleren Molekulargewicht (Zahlenmittel, Mn) des Gesamtpolymers von 1000-50000, vorzugsweise 2000-30000, besonders bevorzugt von 5000-15000.

Unter den bevorzugten erfundungsgemässen Blockcopolymeren sind Verbindungen der Formel I

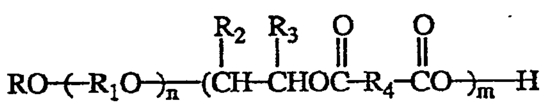 (I),

worin R $C_1$-$C_4$-Alkyl oder einen Rest der Formel II bedeutet

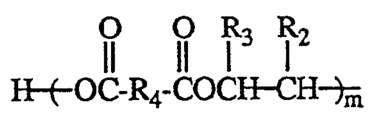 (II),

$R_1$ für $C_2$-$C_{10}$-Alkylen steht, $R_2$ Wasserstoff ist und $R_3$ $C_1$-$C_{12}$-Alkyl, $C_5$-$C_{10}$-Cycloalkyl, $C_6$-$C_{10}$-Aryl oder einen Rest -$CH_2OR_5$ mit $R_5$ gleich $C_4$-$C_{10}$-Alkyl, $C_5$-$C_6$-Cycloalkyl oder $C_6$-$C_{10}$-Aryl, bedeutet oder $R_2$ und $R_3$ zusammen mit den Kohlenstoffatomen, an die sie gebunden sind, einen Cyclopentylen- oder Cyclohexylenrest darstellen, $R_4$ Phenylen oder Naphthylen bedeutet und n für eine ganze Zahl von 2-5000 und m für eine ganze Zahl von 2-1000 stehen.

Beispiele für geeignete Reste R, $R_1$, $R_2$, $R_3$ und $R_4$ können aus den obigen Ausführungen bezüglich der Herstellung der erfindungsgemässen Blockpolymere abgeleitet werden.

Gegenstand der Erfindung ist auch ein Verfahren zur Herstellung der erfindungsgemässen Polyether-Polyester-Blockcopolymere durch anionische Copolymerisation einer Monoepoxidverbindung mit einem cyclischen Anhydrid einer aromatischen Dicarbonsäure unter Verwendung eines Alkalimetallsalzes eines Polyalkylenglykols oder eines Polyalkylenglykolmonoalkylethers als Initiator.

Die Herstellung des Polyalkylenglykol-Alkalimetallsalzes ist weiter oben beschrieben. Die anionische Polymerisation wird vorzugsweise in einem inerten aprotischen Lösungsmittel, wie THF, Toluol, Xylol, Isooctan oder insbesondere in Dioxan durch Erhitzen der Reaktanden, z.B. während 2-3 Tagen bei 80-100°C unter einem Schutzgas durchgeführt. Die Reaktanden werden vorzugsweise in stöchiometrischem Verhältnis eingesetzt. Nach Erreichen des gewünschten Polymerisationsgrades werden der Lösung einige Tropfen Wasser beigegeben, und das Blockcopolymere wird auf geeignete Weise aus dem Reaktionsgemisch isoliert.

Die neuen Blockcopolymere eignen sich zur allgemeinen Anwendung als Dispergiermittel zur Herstellung von Oel-in-Wasser oder von Wasser-in-Oel Dispersionen bzw. Emulsionen. Gegenstand der Erfindung ist somit auch die Verwendung der Blockcopolymere als Dispergiermittel.

Ganz besonders geeignet sind die Blockcopolymere für die Herstellung wässriger Epoxidharzdispersionen oder -emulsionen.

Ein weiterer Gegenstand der Erfindung sind daher wässrige Dispersionen oder Emulsionen enthaltend

(a) ein erfindungsgemässes Blockcopolymer und

(b) ein Epoxidharz.

Die Dispersionen enthalten vorzugsweise 2-20, insbesondere 2-5 Gew.-% des Blockcopolymers (a), 30-78, insbesondere 40-60 Gew.-% des Epoxidharzes (b), 20-70, insbesondere 40-60 Gew.-% Wasser und falls zweckmässig, 0-25, insbesondere 5-6 Gew.-% eines organischen Lösungsmittels, bezogen auf die Gesamtdispersion. Geeignete organische Lösungsmittel sind z.B. 2-Ethoxyethanol, 3-Methoxypropanol, i-Butanol, Toluol oder Xylol.

Die Dispersionen können z.B. in einem Dispergiergerät oder in einem Dissolver durch Vermischen des Blockcopolymers und des Epoxidharzes und anschliessende Wasserzugabe hergestellt werden. Bei Verwendung fester Epoxidharze werden diese vor dem Vermischen vorzugsweise aufgeschmolzen. Falls zweckmässig, können bei der Herstellung der Dispersion zuerst das Blockcopolymere und das Epoxidharz mit einer kleineren Menge eines geeigneten organischen Lösungsmittels (z.B. mit bis zu 15 Gew.-% des Harz/Dispergiermittel-Gemisches) vermischt werden, und danach kann die nötige Menge Wasser zugegeben werden.

Die erfindungsgemässen Dispersionen weisen eine hohe Stabilität auf und können daher während längerer Zeit (z.B. bis zu 12 Monaten) gelagert werden.

In den erfindungsgemässen Dispersionen kann im Prinzip jedes in der Technik bekannte Epoxidharz eingesetzt werden.

Beispiele für Epoxidharze sind:

I) Polyglycidyl- und Poly-(β-methylglycidyl)-ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen und Epichlorhydrin bzw. β-Methyl-epichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)anilin oder p,p′-Bis(2-hydroxyethylamino)diphenylmethan.

Die Epoxidverbindungen können sich auch von einkernigen Phenolen ableiten, wie beispielsweise von Resorcin oder Hydrochinon; oder sie basieren auf mehrkernigen Phenolen, wie beispielsweise Bis(4-hydroxyphenyl)methan, 4,4′-Dihydroxybiphenyl, Bis(4-hydroxyphenyl)sulfon, 1,1,2,2-Tetrakis-(4-hydroxyphenyl)ethan, 2,2-Bis(4-hydroxyphenyl)propan, 2,2-Bis(3,5-dibrom-4-hydroxyphenyl)propan sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$Alkylgruppen substituiert sind, wie beispielsweise 4-Chlorphenol, 2-Methylphenol oder 4-tert-Butylphenol, oder durch Kondensation mit Bisphenolen, so wie oben beschrieben.

III) Poly(N-glycidyl) Verbindungen erhältlich durch Dehydrochlorierung der Reaktionsprodukte von Epichlorhydrin mit Aminen, die mindestens zwei Aminwasserstoffatome enthalten. Bei diesen Aminen handelt es

sich zum Beispiel um Anilin, n-Butylamin, Bis-(4-aminophenyl)methan, m-Xylylendiamin oder Bis(4-methylaminophenyl)methan.

Zu den Poly(N-glycidyl) Verbindungen zählen aber auch Triglycidylisocyanurat, N,N'-Di-glycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl) Verbindungen, beispielsweise Di-S-glycidylderivate, die sich von Dithiolen, wie beispielsweise Ethan-1,2-dithiol oder Bis(4-mercaptomethylphenyl)ether ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis(5,5-dimethyl-1-glycidylhydantoin-3-yl)propan.

Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.

Besonders bevorzugt als Epoxidharze werden Polyglycidylether von Bisphenolen, wie beispielsweise von 2,2-Bis(4-hydroxyphenyl)propan (Bisphenol A) oder Bis(4-hydroxyphenyl)methan (Bisphenol F), von Novolaken, die durch Umsetzung von Formaldehyd mit einem Phenol gebildet werden, oder von den oben erwähnten aliphatischen Diolen, insbesondere von Butan-1,4-diol.

Am meisten bevorzugt als Epoxidharze werden Polyglycidylether auf Basis von Bisphenol A, insbesondere solche mit einem Epoxidgehalt von 2-6 Aequivalenten/kg, welche flüssig sind oder einen Schmelzpunkt von weniger als 100°C haben.

Für die Herstellung der wässrigen Epoxidharzdispersionen am meisten bevorzugte Dispergiermittel sind die erfindungsgemässen Blockcopolymere, welche vom Isophthalsäureanhydrid und Phenylglycidylether, n-Butylglycidylether oder 1-Hexenoxid (Butyloxiran) abgeleitet sind, je einen Polyether- und einen Polyesterblock aufweisen und im Polyetherblock zwischen 90-250 Alkylenglykoleinheiten und im Polyesterblock zwischen 5-30 wiederkeherende Einheiten haben.

Als Härter für die erfindungsgemässen Dispersionen können im Prinzip alle bekannten Härter für Epoxidharze, welche in Wasser stabil sind, d.h. nicht mit Wasser reagieren, und mit Wasser mischbar sind, eingesetzt werden. Beispiele für geeignete Härtungsmittel sind aliphatische, cycloaliphatische, aromarische und heterocyclische Amine, wie Bis(4-aminophenyl)methan, Anilin-Formaldehyd-Harz, Bis(4-aminophenyl)sulfon, Propan-1,3-diamin, Hexamethylendiamin, Diethylentriamin, Triethylentetramin, 2,2,4-Trimethylhexan-1,6-diamin, m-Xylylendiamin, Bis(4-aminocyclohexyl)methan, 2,2-Bis(4-aminocyclohexyl)-propan und 3-Aminomethyl-3,5,5-trimethylcyclohexylamin (Isophorondiamin), Polyaminoamide, wie beispielsweise solche aus aliphatischen Polyaminen und dimerisierten oder trimerisierten Fettsäuren, Polyphenole, wie Resorcin, Hydrochinon, 2,2-Bis(4-hydroxyphenyl)propan und Phenol-Aldehyd-Harze, Polycarbonsäuren, wie zum Beispiel Phthalsäure, Tetrahydrophthalsäure, Hexahydrophthalsäure, Hexachlorendomethylentetrahydrophthalsäure, Pyromellitsäure, Benzophenon-3,3,4',4'-tetracarbonsäure, Isophthalsäure und Terephthalsäure. Bevorzugte Härter sind Polyaminoamide.

Die Menge des eingesetzten Härtungsmittels richtet sich nach der chemischen Natur des Härtungsmittels und nach den gewünschten Eigenschaften der härtbaren Mischung und des gehärteten Produktes. Die maximale Menge kann leicht ermittelt werden. Wenn das Härtungsmittel ein Amin ist, werden normalerweise 0,75 bis 1,25 Aequivalente Aminwasserstoff pro 1 Epoxidäquivalent eingesetzt. Wenn Polycarbonsäuren eingesetzt werden, verwendet man gewöhnlich 0,4 bis 1,1 Aequivalente Carboxylgruppe pro 1 Aequivalent Epoxidgruppe. Bei der Verwendung von Polyphenolen als Härtungsmittel setzt man zweckmässig 0,75 bis 1,25 phenolische Hydroxylgruppen pro 1 Epoxidäquivalent ein.

Gewünschtenfalls kann man den härtbaren Gemischen aktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Man kann bei der Härtung ausserdem Härtungsbeschleuniger einsetzen; solche Beschleuniger sind z.B. tertiäre Amine, deren Salze oder quaternäre Ammoniumverbindungen, z.B. Benzyldimethylamin, 2,4,6-Tris(dimethylaminomethyl)phenol, 1-Methylimidazol, 2-Ethyl-4-methylimidazol, 4-Aminopyridin und Tripentylammoniumphenolat. Die Härtung der erfundungsgemässen Mischungen wird zweckmässig im Temperaturintervall von Raumtemperatur bis 80°C, bevorzugt von 20 bis 50°C, durchgeführt.

Man kann die Härtung in bekannter Weise auch zwei- oder mehrstufig durchführen, wobei die erste Härtungsstufe bei niedriger Temperatur und die Nachhärtung bei höherer Temperatur durchgeführt wird.

Der Ausdruck "Härten", wie er hier gebraucht wird, bedeutet die Umwandlung der löslichen, entweder flüssigen oder schmelzbaren Polyepoxide in feste, unlösliche und unschmelzbare, dreidimensional vernetzte Produkte bzw. Werkstoffe, und zwar insbesondere zu Imprägnierungen, Beschichtungen, Lackfilmen oder Verklebungen.

Die härtbaren Gemische können ferner geeignete Weichmacher, wie Dibutylphthalat, Dioctylphthalat oder Trikresylphthalat, enthalten.

Schliesslich können die härtbaren Gemische vor der Härtung in irgendeiner Phase mit Streck-, Füll- und Verstärkungsmitteln, wie beispielsweise mineralischen Silikaten, Glimmer, Quarzmehl, Aluminiumoxidhydrat, Bentoniten, Kaolin, Kieselsäureaerogel oder Metallpulvern, z.B. Aluminiumpulver oder Eisenpulver, ferner mit Pigmenten und Farbstoffen, wie Russ, Oxidfarben, Titandioxid u.a. versetzt werden. Man kann den härtbaren Gemischen ferner auch andere übliche Zusätze. z.B. Flammschutzmittel, Thixotropiemittel und Verlaufmittel ("flow control agents"), wie Silicone, Wachse oder Stearate, zusetzen.

Die Herstellung der härtbaren Mischungen kann in üblicher Weise durch Zugabe des Härtungsmittels zu den erfindungsgemässen Dispersionen und mit Hilfe bekannter Mischaggregate erfolgen.

Die härtbaren Epoxidharzmischungen finden ihren Einsatz vor allem auf den Gebieten des Oberflächenschutzes, der Elektrotechnik, der Laminierverfahren und im Bauwesen. Sie können in jeweils dem speziellen Anwendungszweck angepasster Formulierung, im ungefüllten oder gefüllten Zustand, als Anstrichmittel, Lacke, Tauchharze, Imprägnierharze und Klebmittel, als Laminierharze, Dichtungs- und Spachtelmassen, Bodenbelagsmassen und Bindemittel für mineralische Aggregate verwendet werden.

Die erfindungsgemässen wässrigen Dispersionen eignen sich insbesondere für die Herstellung von Ueberzügen, Beschichtungs- und Anstrichsmaterialien sowie von Klebstoffen. Sie weisen insbesondere ausgezeichnete Gebrauchseigenschaften, wie geringe Viskosität und lange Gebrauchsdauer, auf. Die gehärteten Produkte zeichnen sich durch hohe, schnell erreichbare Härte aus.

Gegenstand der Erfindung sind auch vernetzte Produkte erhältlich durch Härtung der erfindungsgemässen Dispersionen mit einem Härtungsmittel für Epoxidharze.

Die folgenden Beispiele erläutern die Erfindung.

## BEISPIELE

### Allgemeines Herstellungsverfahren der Blockcopolymeren

In einem Sulfierkolben mit Rührer, Kühler und Thermometer werden 50 g Polyalkylenglykol in ca. 150 ml getrocknetem, frisch destilliertem Dioxan unter leichtem Erwärmen unter $N_2$ gelöst. Zu der auf 25°C abgekühlten Lösung werden 7 g einer 30%-igen Natrium-Dispersion in Toluol gegeben und 2h bei Raumtemperatur gerührt. Dann wird die Mischung unter $N_2$ in einen Dreihalskolben mit Thermometer, Kühler und Magnetrührer filtriert. Die benötigten Mengen an Monoepoxid und Anhydrid werden hinzugefügt, und die Lösung wird 2-3 Tage bei 80-100°C unter $N_2$ gerührt. Nach Zugabe von einigen Tropfen Wasser wird die Lösung am Rotationsverdampfer auf die Hälfte bis 2/3 des ursprünglichen Volumens eingeengt und mit der 3-5-fachen Menge an Diethylether ausgefällt. Das erhaltene Produkt wird nochmals aus ca. 100 ml Methylenchlorid/500 ml Diethylether umgefällt.

### Beispiele 1-4: Synthese der Blockcopolymeren

Beispiel 1: 50 g Polyethylenglykol-5000-monomethylether (0,01 mol) werden in 150 ml destilliertem Dioxan unter $N_2$ gelöst. 7 g einer 30%-igen Na-Dispersion in Toluol werden hinzugefügt und 2h bei Raumtemperatur gerührt. Die Mischung wird in einen 250 ml-Zweihalskolben filtriert, und 12 g Phenylglycidylether (0,08 mol) und 12 g Phthalsäureanhydrid (0,08 mol) werden hinzugefügt. Die Lösung wird 2 Tage bei 80°C gerührt. Nach Zugabe von einigen Tropfen $H_2O$ wird die Reaktionsmischung filtriert, das Filtrat wird am Rotationsverdampfer auf ca. 100 ml eingeengt und mit 500 ml Diethylether ausgefällt. Das so erhaltene Polymer wird nochmals aus Methylenchlorid/Diethylether umgefällt.

Ausbeute: 52 g (70,2 %), Mn = 6400, Mw = 12000 (mittleres Mol.Gew.,Gewichtsmittel).

Beispiel 2: Der Versuch aus Beispiel 1 wird wiederholt. Statt 12 g Phenylglycidylether werden 7,85 g Cyclohexenoxid (0,08 mol) verwendet.

Ausbeute: 50 g (71,5 %), Mn = 7900, Mw = 12800.

Beispiel 3: Der Versuch aus Beispiel 1 wird wiederholt. Statt 12 g Phenylglycidylether werden 10,41 g Butylglycidylether (0,08 mol) verwendet.

Ausbeute: 54,3 g (75 %), Mn = 5000, Mw = 11000.

Beispiel 4: Der Versuch aus Beispiel 1 wird wiederholt. Statt 12 g Phenylglycidylether werden 8,01 g Butyloxiran (1-Hexen-oxid; 0,08 mol) verwendet.
Ausbeute: 51,8 g (74 %), Mn = 5700, Mw = 11000.

Beispiele 5-10: Herstellung der wässrigen Epoxidharzdispersionen

Beispiel 5: 80 g eines festen Epoxidharzes auf der Basis von Bisphenol A mit einem Epoxidgehalt von 2,2 Aequivalenten/kg werden bei ca. 100°C in einem Ofen aufgeschmolzen, und 4,8 g Polymer aus Beispiel 1 und 9 ml 2-Ethoxyethanol werden bei Raumtemperatur hinzugefügt und mit einem Dispergiergerät (Rotor-Stator-Ultra-Turrax T-25) bei kleiner Umdrehungszahl vermischt. Dann werden 72 ml Wasser in Portionen von ca. 10 ml hinzugefügt. Bis zu einer Menge von ca. 20 ml Wasser wird bei höchster Umdrehungszahl (24000 U/min) gerührt. Mit zunehmender Verflüssigung des Gemisches wird die Umdrehungszahl auf ca. 8000 U/min vermindert. Es entsteht eine stabile homogene Dispersion mit einer Viskosität von 520 cps bei 25°C (Brookfield, Spindel Nr. 4) und einem Epoxidgehalt von 1,05 Epoxidäqu./kg.

Beispiel 6: Der Versuch aus Beispiel 5 wird mit 6 g Polymer aus Beispiel 1 wiederholt. Es entsteht eine stabile homogene Dispersion mit einer Viskosität von 4800 cps bei 25°C (Brookfield, Spindel Nr. 4) und einem Epoxidgehalt von 1,01 Epoxidäqu./kg.

Beispiel 7: Der Versuch aus Beispiel 5 wird mit 4,8 g Polymer aus Beispiel 3 wiederholt. Es entsteht eine stabile wässrige Dispersion mit einer Viskosität von ca. 200 cps bei 25°C (Brookfield, Spindel Nr. 4) und einem Epoxidgehalt von 1,03 Epoxidäqu./kg.

Beispiel 8: Der Versuch aus Beispiel 5 wird mit einem Dissolver mit Zahnscheibe bei ca. 3000 U/min wiederholt. Es entsteht eine stabile wässrige Dispersion mit einer Viskosität von ca. 6000 cps bei 25°C (Brookfield, Spindel Nr. 4) und einem Epoxidgehalt von 1, 15 Epoxidäqu./kg.

Beispiel 9: Der Versuch aus Beispiel 5 wird mit 4,8 g Polymer aus Beispiel 4 wiederholt. Es entsteht eine stabile wässrige Dispersion mit einer Viskosität von 110 cps und einem Epoxidgehalt von 1,06 Epoxidäqu./kg.

Beispiel 10: 80 g eines flüssigen Epoxidharzes auf der Basis von Bisphenol A mit einem Epoxidgehalt von 5,5 Aequivalenten/kg werden mit 4,8 g Polymer aus Beispiel 3 und 9 ml 2-Ethoxyethanol mit einem Dispergiergerät (Rotor-Stator-Ultra-Turrax T-25) bei kleiner Umdrehungszahl vermischt. Dann werden 72 ml Wasser in Portionen von ca. 10 ml hinzugefügt. Bis zu einer Menge von ca. 20 ml Wasser wird bei höchster Umdrehungszahl (24000 U/min) gerührt. Mit zunehmender Verflüssigung des Gemisches wird die Umdrehungszahl auf ca. 8000 U/min vermindert. Es entsteht eine stabile, homogene Emulsion mit einer Viskosität von 200 cps bei 25°C (Brookfield, Spindel Nr. 4) und einem Epoxidgehalt von 2,68 Epoxidäqu./kg.

Applikationsbeispiele 11-14

Die in den Beispielen angegebene Staubtrockenheit und Durchhärtung werden mit einem Gerät der Fa. Landolt bestimmt.

Beispiel 11: 30 g der Dispersion aus Beispiel 6 werden mit 6,48 g einer 50 gew.%-igen wässrigen Lösung eines Polyaminoamides mit einer Aminzahl von 165 mg KOH/g (Ciba-Geigy HZ 340) vermischt. Mit dieser Mischung werden Filme auf Al-Blechen hergestellt, so dass eine Trockenfilmdicke von ca. 50 µm erhalten wird.
Folgende lacktechnische Eigenschaften werden erhalten:
Gebrauchsdauer der Harz/Härter-Mischung (erstmaliges Auftreten einer Trübung im Film nach Mischen von Harz und Härter): 4h;
Staubtrockenheit des Films (auf den Film gestreuter Sand lässt sich nach der Aushärtung nicht mehr mit einem Pinsel entfernen): 6h;

| | | |
|---|---|---|
| Durchhärtung: | | 13,5h |
| König-Härte (DIN 53 157) | (1 Tag) | 68s |
| König-Härte | (7 Tage) | 132s |
| König-Härte | (4 Wochen) | 170s. |

Beispiel 12: 30 g der Dispersion aus Beispiel 7 werden mit 6,66 g des oben genannten Härters vermischt. Die Gebrauchsdauer dieser Mischung beträgt 4h. Filme auf Al-Blechen (~50 µm Trockenfilmdicke) haben folgende Eigenschaften:

| | |
|---|---|
| Staubtrockenheit: | 6,5h |
| Durchhärtung: | 15h |
| König-Härte (1 Tag): | 100s |
| König-Härte (7 Tage): | 150s |
| König-Härte (4 Wochen): | 169s. |

Beispiel 13: 30 g der Dispersion aus Beispiel 9 werden mit 6,81 g des oben genannten Härters vermischt. Die Gebrauchsdauer dieser Mischung beträgt 4h. Filme auf Al-Blechen (~50 µm Trockenfilmdicke) haben folgende Eigenschaften:

| | |
|---|---|
| Staubtrockenheit: | 4h |
| Durchhärtung: | 14,5h |
| König-Härte (1 Tag): | 95s |
| König-Härte (7 Tage): | 144s |
| König-Härte (4 Wochen): | 165s. |

Beispiel 14: 30 g der Dispersion aus Beispiel 8 werden mit 7,44 g des oben genannten Härters vermischt. Die Gebrauchsdauer dieser Mischung beträgt 3h. Filme auf Al-Blechen (~50 µm Trockenfilmdicke) haben folgende Eigenschaften:

| | |
|---|---|
| Staubtrockenheit: | 7h |
| Durchhärtung: | 10h |
| König-Härte (1 Tag): | 115s |
| König-Härte (7 Tage): | 158s |
| König-Härte (4 Wochen): | 175s. |

Beispiel 15 (Herstellung von Triblockcopolymeren): 50 g Polyethylenglykol 6000 (0,017 Aequivalente Hydroxylgruppe) werden in 300 ml destilliertem Dioxan unter Stickstoff gelöst. 7 g einer 30 %-igen Natriumdispersion in Toluol werden hinzugefügt und 2 Stunden bei Raumtemperatur gerührt. Die erhaltene Mischung wird in einen 500 ml Zweihalskolben filtriert, und 8,48 g Phenylglycidylether (0,057 mol) und 8,48 g Phthalsäureanhydrid (0,057 mol) werden hinzugefügt. Die erhaltene Mischung wird 2 Tage bei 80°C gerührt. Nach Zugabe von einigen Tropfen Wasser wird die Reaktionsmischung filtriert, und das Filtrat wird auf ca. 100 ml eingeengt und mit 500 ml Diethylether ausgefällt. Das so erhaltene Polymere wird nochmals aus Methylenchlorid/Diethylether umgefällt. Ausbeute: 55 g (82%) eines Produktes mit Mn= 5700 und Mw= 10100.

Beispiel 16: Das Beispiel 15 wird wiederholt, mit dem Unterschied jedoch dass anstatt Polyethylenglykol 6000 50 g Polyethylenglykol 10000 (0,01 Aequivalente Hydroxylgruppe) verwendet werden. Zur filtrierten Lösung des Natriumsalzes des Polyethylenglykols werden 5,03 g Phenylglycidylether (0,034 mol) und 5,03 g Phthalsäureanhydrid (0,034 mol) hinzugefügt. Ausbeute: 52,3 g (87%) eines Produktes mit Mn= 7800 und Mw= 20200.

Beispiel 17 (Herstellung von Dispersionen): 80 g eines festen Epoxidharzes auf der Basis von Bisphenol A mit einem Epoxidgehalt von 2,2 Aequivalenten/kg werden bei ca. 100°C in einem Ofen aufgeschmolzen, und 4,8 g Polymer aus Beispiel 15 und 9 ml 2-Ethoxyethanol werden bei Raumtemperatur hinzugefügt. Das erhaltene Gemisch wird mit einem Dispergiergerät (Rotor-Stator- Ultra-Turrax T-25) bei kleiner Umdrehungszahl homogenisiert. Dannn werden 72 ml Wasser in Portionen von 10 ml hinzugefügt. Bis zu einer Menge von ca. 20 ml Wasser wird bei höchster Umdrehungszahl gerührt. Mit zunehmender Verflüssigung des Gemisches wird die Umdrehungszahl auf ca. 8000 U/min. vermindert. Es entsteht eine sehr flüssige Dispersion, die jedoch schon nach wenigen Stunden eine Tendenz zur Phasentrennung zeigt.

Beispiel 18: Das Beispiel 17 wird wiederholt, mit dem Unterschied jedoch dass 4,8 g Polymer aus Beispiel 16 verwendet werden. Es entsteht eine homogene Dispersion, die ebenfalls nach wenigen Stunden eine Tendenz zur Phasentrennung aufweist.

## Patentansprüche

1. Polyether-Polyester-Blockcopolymere erhältlich durch anionische Copolymerisation einer Monoepoxidverbindung mit einem cyclischen Anhydrid einer aromatischen Dicarbonsäure unter Verwendung eines Alkalimetallsalzes eines Polyalkylenglykols oder eines Polyalkylenglykolmonoalkylethers als Initiator.

2. Blockcopolymere nach Anspruch 1, worin das Polyalkylenglykol 2-5000, vorzugsweise 10-250 Alkylenglykoleinheiten hat.

3. Blockcopolymere nach Anspruch 1 oder 2, worin die Alkylengruppe des Polyalkylenglykols 1,4-Butylen, 1,2- oder 1,3-Propylen oder insbesondere Ethylen ist.

4. Blockcopolymere nach einem der Ansprüche 1 bis 3, worin die Monoepoxidverbindung ein Glycidylether, ein Alkenoxid oder ein Cycloalkenoxid, insbesondere Phenylglycidylether, Butylglycidylether, 1-Hexenoxid oder Cyclohexenoxid ist.

5. Blockcopolymere nach einem der Ansprüche 1-4, worin das cyclische Anhydrid 1,8-Naphthalindicarbonsäure- oder insbesondere Phthalsäureanhydrid ist.

6. Blockcopolymere nach einem der Ansprüche 1-5 enthaltend einen Polyetherblock und einen oder zwei Polyesterblöcke.

7. Blockcopolymere nach Anspruch 6, worin der Polyesterblock 2-1000, vorzugsweise 3-35 wiederkehrende Einheiten hat.

8. Blockcopolymere nach einem der Ansprüche 1-7 mit einem mittleren Molekulargewicht (Zahlenmittel) von 1000-50000, vorzugsweise 2000-30000, besonders bevorzugt 5000-15000.

9. Blockcopolymere nach Anspruch 1 der Formel I

$$RO\!\left(R_1O\right)_n\!\left(\overset{R_2}{\overset{|}{C}}H-\overset{R_3}{\overset{|}{C}}HO\overset{O}{\overset{\|}{C}}-R_4-\overset{O}{\overset{\|}{C}}O\right)_m\!H \qquad (I),$$

   worin R $C_1$-$C_4$-Alkyl oder einen Rest der Formel II bedeutet

$$H\!\left(O\overset{O}{\overset{\|}{C}}-R_4-\overset{O}{\overset{\|}{C}}O\overset{R_3}{\overset{|}{C}}H-\overset{R_2}{\overset{|}{C}}H\right)_m \qquad (II),$$

   $R_1$ für $C_2$-$C_{10}$-Alkylen steht, $R_2$ Wasserstoff ist und $R_3$ $C_1$-$C_{12}$-Alkyl, $C_5$-$C_{10}$-Cycloalkyl, $C_6$-$C_{10}$-Aryl oder einen Rest $-CH_2OR_5$ mit $R_5$ gleich $C_4$-$C_{10}$-Alkyl, $C_5$-$C_6$-Cycloalkyl oder $C_6$-$C_{10}$-Aryl, bedeutet oder $R_2$ und $R_3$ zusammen mit den Kohlenstoffatomen, an die sie gebunden sind, einen Cyclopentylen- oder Cyclohexylenrest darstellen, $R_4$ Phenylen oder Naphthylen bedeutet und n für eine ganze Zahl von 2-5000 und m für eine ganze Zahl von 2-1000 stehen.

10. Verfahren zur Herstellung der Blockcopolymere nach einem der Ansprüche 1-9 durch anionische Copolymerisation einer Monoepoxidverbindung mit einem cyclischen Anhydrid einer aromatischen Dicarbonsäure unter Verwendung eines Alkalimetallsalzes eines Polyalkylenglykols oder eines Polyalkylenglykolmonoalkylethers als Initiator.

11. Verwendung der Blockcopolymere nach einem der Ansprüche 1-9 als Dispergiermittel.

12. Wässrige Dispersion oder Emulsion enthaltend
(a) ein Blockcopolymer nach einem der Ansprüche 1-9 und
(b) ein Epoxidharz.

13. Dispersion nach Anspruch 12 enthaltend 2-20, vorzugsweise 2-5 Gew.-% des Blockcopolymers (a), 30-78, vorzugsweise 40-60 Gew.-% des Epoxidharzes (b), 20-70, vorzugsweise 40-60 Gew.-% Wasser und gegebenenfalls 0-25, vorzugsweise 5-6 Gew.-% eines organischen Lösungsmittels, bezogen auf die Gesamtdispersion.

14. Vernetzte Produkte erhältlich durch Härtung der Dispersion nach Anspruch 12 mit einem Härtungsmittel für Epoxidharze.

**Patentansprüche für folgenden Vertragsstaat : ES**

1. Verfahren zur Herstellung von Polyether-Polyester-Blockcopolymeren durch anionische Copolymerisation einer Monoepoxidverbindung mit einem cyclischen Anhydrid einer aromatischen Dicarbonsäure unter Verwendung eines Alkalimetallsalzes eines Polyalkylenglykols oder eines Polyalkylenglykolmonoalkylethers als Initiator.

2. Verfahren nach Anspruch 1, wonach das Polyalkylenglykol 2-5000, vorzugsweise 10-250 Alkylenglykoleinheiten hat.

3. Verfahren Anspruch 1 oder 2, wonach die Alkylengruppe des Polyalkylenglykols 1,4-Butylen, 1,2- oder 1,3-Propylen oder insbesondere Ethylen ist.

4. Verfahren nach einem der Ansprüche 1 bis 3, wonach die Monoepoxidverbindung ein Glycidylether, ein Alkenoxid oder ein Cycloalkenoxid, insbesondere Phenylglycidylether, Butylglycidylether, 1-Hexenoxid oder Cyclohexenoxid ist.

5. Verfahren nach einem der Ansprüche 1-4, wonach das cyclische Anhydrid 1,8-Naphthalindicarbonsäure- oder insbesondere Phthalsäureanhydrid ist.

6. Verfahren nach einem der Ansprüche 1-5, wonach die Polyether-Polyester-Blockcopolymere einen Polyetherblock und einen oder zwei Polyesterblöcke enthalten.

7. Verfahren Anspruch 6, wonach der Polyesterblock 2-1000, vorzugsweise 3-35 wiederkehrende Einheiten hat.

8. Verfahren nach einem der Ansprüche 1-7, wonach die Polyether-Polyester-Blockcopolymere ein mittleres Molekulargewicht (Zahlenmittel) von 1000-50000, vorzugsweise 2000-30000, besonders bevorzugt 5000-15000 aufweisen.

9. Verfahren nach Anspruch 1, wonach die Blockcopolymere die Formel I

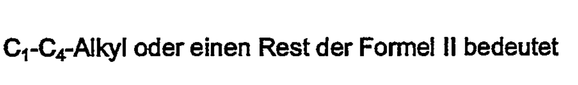 (I) aufweisen,

worin R $C_1$-$C_4$-Alkyl oder einen Rest der Formel II bedeutet

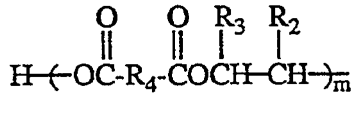 (II),

$R_1$ für $C_2$-$C_{10}$-Alkylen steht, $R_2$ Wasserstoff ist und $R_3$ $C_1$-$C_{12}$-Alkyl, $C_5$-$C_{10}$-Cycloalkyl, $C_6$-$C_{10}$-Aryl oder einen Rest -$CH_2OR_5$ mit $R_5$ gleich $C_4$-$C_{10}$-Alkyl, $C_5$-$C_6$-Cycloalkyl oder $C_6$-$C_{10}$-Aryl, bedeutet oder $R_2$ und

$R_3$ zusammen mit den Kohlenstoffatomen, an die sie gebunden sind, einen Cyclopentylen- oder Cyclohexylenrest darstellen, $R_4$ Phenylen oder Naphthylen bedeutet und n für eine ganze Zahl von 2-5000 und m für eine ganze Zahl von 2-1000 stehen.

**10.** Verfahren zur Herstellung der Blockcopolymere nach Anspruch 9 durch anionische Copolymerisation einer Monoepoxidverbindung mit einem cyclischen Anhydrid einer aromatischen Dicarbonsäure unter Verwendung eines Alkalimetallsalzes eines Polyalkylenglykols oder eines Polyalkylenglykolmonoalkylethers als Initiator.

**11.** Wässrige Dispersion oder Emulsion enthaltend
(a) ein Blockcopolymer nach einem der Ansprüche 1-9 und
(b) ein Epoxidharz.

**12.** Dispersion nach Anspruch 11 enthaltend 2-20, vorzugsweise 2-5 Gew.-% des Blockcopolymers (a), 30-78, vorzugsweise 40-60 Gew.-% des Epoxidharzes (b), 20-70, vorzugsweise 40-60 Gew.-% Wasser und gegebenenfalls 0-25, vorzugsweise 5-6 Gew.-% eines organischen Lösungsmittels, bezogen auf die Gesamtdispersion.

**13.** Vernetzte Produkte erhältlich durch Härtung der Dispersion nach Anspruch 11 mit einem Härtungsmittel für Epoxidharze.